# EUROPÄISCHE PATENTSCHRIFT

(11) **EP 3 591 838 B1**
(45) Veröffentlichungstag und Bekanntmachung des Hinweises auf die Patenterteilung: **21.04.2021**
(21) Anmeldenummer: 19181889.7
(22) Anmeldetag: 24.06.2019
(51) Int. Cl.: H02S 50/00

(54) **FAHRZEUGSYSTEM UND VERFAHREN ZUM AUTONOMEN UND AUTOMATISIERTEN WARTEN ODER PFLEGEN EINER PHOTOVOLTAIK-FREIFLÄCHENANLAGE**
VEHICLE SYSTEM AND METHOD FOR AUTONOMOUS AND AUTOMATED MAINTENANCE OR CARE OF A PHOTOVOLTAIC FREE SURFACE SYSTEM
SYSTÈME DE VÉHICULE ET PROCÉDÉ D'ENTRETIEN OU DE SOIN AUTONOME ET AUTOMATISÉ D'UNE INSTALLATION PHOTOVOLTAÏQUE EN CHAMP LIBRE

(30) Priorität: 06.07.2018 DE 102018116479
(43) Veröffentlichungstag der Anmeldung: 08.01.2020
(73) Patentinhaber: Hampe & Schellhorn Service GbR, 99310 Arnstadt (DE)
(72) Erfinder: Hampe, Dieter, 99310 Arnstadt (DE); Schellhorn, Harry, 99334 Amt Wachsenburg (DE)
(74) Vertreter: Weidner Stern Jeschke

(56) Entgegenhaltungen:
- WO-A2-2012/168070
- US-A1- 2017 184 524

## Beschreibung

Die Erfindung betrifft ein Fahrzeugsystem zum autonomen und automatisierten Warten und/oder Pflegen einer Photovoltaik-Freiflächenanlage mit einer Steuereinheit, einer Trägerplattform, einer Wärmebildkamera und einer zugeordneten Recheneinheit zum Auswerten eines Bildes der Wärmebildkamera, wobei an der Trägerplattform eine verstellbare Halterungseinrichtung zum Führen der Wärmebildkamera und/oder einer Reinigungseinheit zum Reinigen von Photovoltaikmodulen angeordnet ist, und dem Fahrzeugsystem eine Bodenpflegeeinheit zum Pflegen eines Bodens in einer Umgebung der Photovoltaik-Freiflächenanlage zugeordnet ist. Des Weiteren betrifft die Erfindung ein Verfahren zum autonomen und automatisierten Warten und/oder Pflegen einer Photovoltaik-Freiflächenanlage.

Derzeit sind mehr als 10.000 Photovoltaik-Freiflächenanlagen in Deutschland installiert, zu denen es keine zuverlässigen, beständigen und langfristigen Aussagen über deren Zustand oder dem Zustand der einzelnen Solarpaneele gibt. Wartungsarbeiten beschränken sind üblicherweise auf eine jährliche Sichtkontrolle der Photovoltaik-Freiflächenanlage sowie regelmäßige Mäharbeiten und Grünanlagenpflege. Für Mäharbeiten können bekannte selbstfahrende Rasenroboter eingesetzt werden. Jedoch werden hierbei defekte Paneele oder eine Leistungsminderung eines Paneels in Zeiten zwischen den üblichen Wartungsarbeiten nicht erkannt.

Auch aufgrund der Personalkosten findet eine regelmäßige Leistungskontrolle mittels Referenzmessung, Wärmebildkamera und Flash-Tests nur auf Aufforderung durch den jeweiligen Servicepartner statt. Hierfür muss jedes Solarpaneel einzeln demontiert, geprüft und wieder in die Photovoltaik-Freiflächenanlage montiert werden. Ein kontinuierliches Überprüfen der Photovoltaik-Freiflächenanlage vor Ort findet derzeit nicht statt. Ein Monitoring im Sinne einer kontinuierlichen Überwachung kann zurzeit nur über die erzeugte Strommenge erfolgen. Da diese Leistungsüberwachung aber stark von den Umweltfaktoren abhängig ist, werden Schäden an den Solarpaneelen erst zu spät und bei großflächigen Ausfällen erkannt. Ausfälle einzelner Solarpaneele gehen hierbei im Rauschen der produzierten Leistung unter. Derzeit erfolgt häufig nur eine Stichprobenkontrolle vor Ort, beispielsweise nach Umwelteinflüssen wie Sturm oder Hagel, oder bei Verdacht aufgrund von Leistungseinbußen. Die derzeit bekannten Monitorsysteme basieren alleine auf der erzeugten Leistung und nicht auf einer kontinuierlichen physischen Begutachtung.

Zudem ist aufgrund der Größe eines Solarparks und der Vielzahl an Photovoltaik-Freiflächenanlagen eine manuelle Überwachung der Solarpaneele sehr aufwändig. Um den Aufwand für die Kontrolle zu reduzieren und diese möglichst effizient zu gestalten, wird versucht, eine Überwachung mittels Infrarotkamera aus der Luft durchzuführen. Die Nutzung von Hubschraubern ist hierbei teuer und kann aufgrund des einzuhaltenden Sicherheitsabstandes keine detaillierten Wärmebildaufnahmen zur Verfügung stellen, da aufgrund der begrenzten Auflösung nur grobe Bilder erzeugt werden können.

Aus der EP 3 136 090 A1 ist ein ferngesteuertes Luftfahrzeug zur Inspektion von Solarkollektoren bekannt, bei welchen eine Wärmebildkamera in einem Prüfkopf zur Detektion von Oberflächenwärme aufgrund einer Fehlfunktion installiert ist, Der Prüfkopf mit der Wärmebildkamera ist innerhalb des ferngesteuerten Luftfahrzeug angeordnet, welches durch eine Bodenstation ferngesteuert wird.

Ebenso ist ein unbemanntes Luftfahrzeug zur Inspektion von Solarkollektoren in der WO 2016/095985 A1 beschrieben. Die Dokumente WO2012168070A und US2017184524A offenbaren Fahrzeuge zur Inspektion oder Wartung von photovoltaischen Installationen.

Nachteilig beim Einsatz von unbemannten Luftfahrzeugen ist, dass diese von einem Bediener ferngesteuert werden müssen und somit nicht selbsttätig und/oder autonom operieren können. Zudem ist neben dem Bediener zur Steuerung des unbemannten Luftfahrzeuges ein zweiter Bediener zur Online-Kontrolle der Bildaufnahmen notwendig, um Schadstellen zu lokalisieren und anschließend im Nahflug diese gezielt zu erfassen. Des Weiteren ist der Einsatz eines ferngesteuerten Luftfahrzeuges, wie einer Drohne, stark wind- und wetterabhängig und kann nicht zu jeder Zeit erfolgen. Häufig erlaubt der Standort von Solarparks in der Nähe von Autobahnen, Bahnstrecken und/oder Flughäfen aus Sicherheitsgründen keinen Einsatz von unbemannten Luftfahrzeugen, wie Drohnen. Zudem stellen alle luftgestützten Verfahren jeweils nur eine einzelne Überwachung aber kein kontinuierliches Monitoring einer Photovoltaik-Freiflächenanlage dar.

Aus der DE 20 2014 008 756 U1 ist ein mobiles Trägerfahrzeug zur Inspektion und Reinigung von Photovoltaikmodulen bekannt, welches sich mittels Triebrollen direkt auf dem Photovoltaikmodulen bewegt. Dazu muss das Trägerfahrzeug zunächst auf der entsprechenden Modulreihe manuell aufgespannt werden und dieses wird dadurch auf der Modulreihe zwangsgeführt. Mittels einer am Hauptrahmen des Trägerfahrzeugs installierten Wärmekamera können Leistungsstörungen detektiert werden. Nachteilig bei diesem Trägerfahrzeug sind das aufwändige Aufspannen auf jeder einzelnen Modulreihe sowie das eingeschränkte Bild der Wärmkamera aufgrund der direkten Anordnung des Trägerfahrzeuges auf den Modulen.

Aufgabe der Erfindung ist es, den Stand der Technik zu verbessern.

Gelöst wird die Aufgabe durch ein Fahrzeugsystem zum autonomen und automatisierten Warten und/oder Pflegen einer Photovoltaik-Freiflächenanlage mit einer Steuereinheit, einer Trägerplattform, einer Wärmebildkamera und einer zugeordneten Recheneinheit zum Auswerten eines Bildes der Wärmebildkamera, wobei an der Trägerplattform eine verstellbare Halterungseinrichtung zum Führen der Wärmebildkamera und/oder einer Reinigungseinheit zum Reinigen von Photovoltaikmodulen angeordnet ist, und dem Fahrzeugsystem eine Bodenpflegeeinheit zum Pflegen eines Bodens in einer Umgebung der Photovoltaik-Freiflächenanlage zugeordnet ist, wobei die verstellbare Halterungseinrichtung derart eingerichtet ist, dass während eines Fahrens des Fahrzeugsystems, des Reinigens von Photovoltaikmodulen und/oder des Pflegens des Bodens die Wärmekamera derart bewegungskompensiert führbar ist, dass mittels eines ausgewerteten Bildes der Wärmebildkamera ein Defekt oder eine Minderleistung des Photovoltaikmoduls der Photovoltaik-Freiflächenanlage detektierbar ist.

Somit wird ein Fahrzeugsystem bereitgestellt, welches neben den normalen Wartungs- und Pflegearbeiten der Photovoltaikmodule selbst und in deren Umgebung auch die Prüfung und Dokumentation des technischen Zustandes der Photovoltaikmodule systematisch durchführt. Folglich ist mittels des Fahrzeugsystems eine häufige Überprüfung im Sinne eines Monitoring ermöglicht und ein Defekt oder eine Minderleistung eines Photovoltaikmoduls wird bereits frühzeitig erkannt, ohne dass dies im Leistungsrauschen der gesamten Photovoltaik-Freiflächenanlage untergeht.

Zudem können die ausgewerteten Daten des Bildes der Wärmekamera für jedes Photovoltaikmodul mit den Bildern der entsprechenden vorgehenden Überprüfung verglichen und somit eine Zeitreihe für jedes Photovoltaikmodul erstellt werden. Eine Klassifizierung der überprüften Solarzellen wird hierbei durch die unterschiedlich abgegebene Wärmestrahlung ermöglicht. Diese Auswertung der Bilder der Kamera kann den Betreiber beispielsweise in aufbereiteter Form als Ampelaussage bereitgestellt werden.

Es ist besonders vorteilhaft, dass die Überprüfung der einzelnen Photovoltaikmodule mittels des Fahrzeugsystems autonom und/oder automatisiert ohne Personaleinsatz durchgeführt wird, sodass die technische Überprüfung entsprechend kostengünstiger und häufiger als bei den üblichen personalintensiven Wartungsüberprüfungen erfolgt. Vor allem bei sehr großen Photovoltaikanlagen ist es zeitsparender, dass in einem Arbeitsgang der Boden in der Umgebung der Photovoltaikanlage gepflegt und/oder ein Photovoltaikmodul gereinigt wird und dabei jedes einzelne Modul überprüft und dokumentiert wird.

Auch kann mittels des Fahrzeugsystems zunächst ein Photovoltaikmodul gereinigt und nach dem Reinigen ein Bild mit der Wärmebildkamera bewegungskompensiert aufgenommen werden. Hierbei wird die Wärmebildkamera mittels der verstellbaren Halterungseinrichtung während des Fahrens des Fahrzeugsystems geführt, um eine ideale Positionierung der Wärmebildkamera zum jeweiligen Paneel und somit einen auftrittswinkeloptimierte und/oder abstandoptimierte Aufnahme zu realisieren. Durch das regelmäßige Monitoring der Solarpaneele können in ihrer Leistung sinkende oder ausfallende Zellen frühzeitig erkannt und diese Leistungsminderung behoben werden. Folglich wird die Leistung des gesamten Solarparks optimiert und der Wirkungsgrad wesentlich erhöht.

Somit erhält der Anlagenbetreiber mit jeder autonomen und automatisierten Wartung und/oder Pflege mittels des Fahrzeugsystems eine detaillierte Aussage über den Ist-Zustand und die Leistungsfähigkeit der Photovoltaik-Freiflächenanlage. Darauf basierend können zeitnah weitere Maßnahmen, wie Reparatur, Austausch und/oder Reinigung von Modulen, veranlasst werden.

Durch das Fahrzeugsystem werden mehrere Wartungs- und/oder Pflegeschritte der Photovoltaik-Freiflächenanlage vereint, optimiert und automatisiert, sodass die Photovoltaik-Freiflächenanlage effizienter bewirtschaftet werden kann.

Ein wesentlicher Gedanke der Erfindung beruht darauf, dass zeiteffizient während des Fahrens des Fahrzeugsystems, dessen Reinigen von Photovoltaikmodulen und/oder dessen Pflegen des Bodens und somit unter Bewegen des Fahrzeugsystems mittels der verstellbaren Halterungseinrichtung die Wärmebildkamera bewegungskompensiert geführt ist, sodass ein optimales Bild eines Photovoltaikmoduls aufnehmbar ist. Durch das optimiert aufgenommene Wärmebild jedes Photovoltaikmoduls, ist der jeweilige technische Zustand ermittelbar und somit können einzelne defekte Module in einer Photovoltaikanlage erkannt werden. Hierzu werden die einzelnen Module mit einem entsprechenden Leistungswert versehen, indem ein aufgenommenes Wärmebild mit den entsprechend gegebenen Maßen, welche sich aufgrund der Optik und/oder aufgrund des Abstandes der Wärmebildkamera zum Photovoltaikmodul ergibt, mittels einer Bilderkennung ermittelt werden. Durch die Kopplung dieser Auswertung mit dem Fahrzeugsystem wird eine optimierte und/oder kontinuierliche und vor allem regelmäßige Untersuchung und/oder Dokumentation der Photovoltaikanlage ermöglicht.

Zusätzlich können außergewöhnliche Verläufe der Qualität einzelnen Photovoltaikmodule abgebildet werden, sodass mithin eine Dokumentation erfolgen kann, welche beispielsweise Regressansprüche gegenüber dem Hersteller des Photovoltaikmoduls begründen kann.

Bei einem "Fahrzeugsystem" handelt es sich insbesondere um ein autonomes und/oder ferngesteuertes Fahrzeug. Ein Fahrzeugsystem fährt insbesondere auf dem Boden in der Umgebung der Photovoltaik-Freiflächenanlage. Ein Fahrzeugsystem weist insbesondere eine Trägerplattform auf, welche entsprechend der jeweiligen Wartungs-, Reinigungs- und/oder Pflegeaufgabe durch weitere Fahrzeugkomponenten, wie beispielsweise einen Anhänger mit einem Wassertank, ergänzt und/oder entsprechend umgerüstet werden kann. Das Fahrzeugsystem fährt insbesondere autonom, beispielsweise aufgrund eines der Steuereinheit vorgegebenen Grünflächenplans, oder ferngesteuert selbststätig auf dem Boden der Photovoltaikanlage und führt dabei autonom und automatisch seine Aufgaben durch. Hierbei führt das Fahrzeugsystem insbesondere gleichzeitig eine Bodenpflege und/oder eine Reinigung der Photovoltaikmodule sowie eine Detektion eines Defektes oder einer Minderleistung einzelner Photovoltaikmodule mittels der Wärmebildkamera durch.

Das Fahrzeugsystem weist insbesondere ein Antriebs- und Energiesystem, einen Generator mit Verbrennungsmotor, ein Batterie- und/oder Akkumulatorladesystem und/oder eine Steuereinheit auf.

Die Steuereinheit weist insbesondere ein GPS, einen 2D-Scanner, CPU, Einheit zur Simultanen Positionsbestimmung und Kartenerstellung (SLAM) und/oder Sensorik auf.

Ein Fahrzeugsystem kann beispielsweise jedoch auch zwei autonome einzelne Fahrzeuge aufweisen, wobei beispielsweise das erste autonome Fahrzeug vorweg fährt und ein Reinigen der Photovoltaikmodule durchführt und das zweite autonome Fahrzeug dem ersten hinterherfährt und von den gereinigten Photovoltaikmodulen ein optimiertes Wärmebild mittels der Wärmebildkamera aufnimmt. Ebenso kann ein einzelnes Fahrzeugsystem auch zwei verstellbare Halterungseinrichtungen aufweisen, wobei die erste Halterungseinrichtung die Reinigungseinheit zum Reinigen der Photovoltaikmodule führt und die zweite Halterungseinrichtung die Wärmebildkamera zur Aufnahme eines Wärmebildes bewegungskompensiert führt. Ebenso können die Reinigungseinheit und die Wärmebildkamera beide an einer einzigen verstellbaren Halterungseinrichtung angeordnet sein.

Eine "Wärmebildkamera" (auch "Infrarotkamera" genannt) ist ein bildgebendes Gerät, welches Infrarotstrahlung empfängt. Eine Wärmebildkamera dient insbesondere für die Messung und bildliche Darstellung von Temperaturen im Umgebungstemperaturbereich von Photovoltaikmodulen und anderen Objekten auf einer Photovoltaikanlage, wie beispielsweise Rohrleitungen. Mit der Wärmebildkamera werden insbesondere die Oberflächentemperaturen eines Photovoltaikmoduls erfasst. Die von einer Infrarotkamera empfangbare Infrarotstrahlung liegt insbesondere in einem Bereich von 0,1 µm bis 1.000 µm, wobei in der Nähe der Umgebungstemperatur insbesondere ein Spektralbereich von ungefähr 3,5 µm bis 15 µm verwendet wird.

Bei einem "Bild" (auch "Wärmebild") handelt es sich insbesondere um ein Bild der Wärmekamera. Das Bild stellt insbesondere die Oberflächentemperaturen eines Photovoltaikmoduls, der umgebenden Luft, des Bodens und/oder weiterer umgebenden Gegenstände dar. Bei einem Bild handelt es sich insbesondere um ein Thermogram.

Unter einer "Recheneinheit" wird insbesondere ein elektronisches Rechenwerk verstanden, welches beispielsweise in einem Prozessor zum Einsatz kommt. Bei einer Recheneinheit kann es sich auch um einen Computer oder ein elektronisches Datenverarbeitungsgerät handeln. Die Recheneinheit kann beispielsweise in einer Steuer- und/oder Regeleinheit des Fahrzeugsystems integriert sein.

Eine "verstellbare Halterungseinrichtung" ist insbesondere ein um 360° drehbare, schwenkbare, neigbare und/oder ausfahrbare Halterung zum Führen der Wärmebildkamera und/oder der Reinigungseinheit. Bei einer verstellbaren Halterungseinrichtung kann es sich beispielsweise um einen Teleskoparm mit Drehgelenken und Schwenk-Neige-Einheit (Pan-Tilt-Unit) handeln. Eine verstellbare Halterungseinrichtung ist beispielsweise auch ein Roboterarm oder Manipulator.

Unter "bewegungskompensiert" wird insbesondere verstanden, dass die verstellbare Halterungseinrichtung die Wärmekamera und/oder die Reinigungseinheit derart führt, dass eine Bewegung des Fahrzeugsystems aufgrund des Fahrens, Reinigens und/oder Pflegens, nicht zu einer Verschiebung des aufzunehmenden Bildbereiches führt und somit den aufzunehmenden Bildbereich optimal ausrichtet und/oder die Reinigungseinheit optimal an das Photovoltaikmodul herangeführt wird, ohne dass dies beim Reinigen beschädigt wird. Durch die Bewegungskompensation wird eine auftreffwinkeloptimierte und/oder abstandsoptimierte Aufnahme durch die Wärmebildkamera sowie ein hochwertige Reinigen gewährleistet.

Unter einer "Reinigungseinheit" wird insbesondere ein Reinigungsgerät und/oder Aufsatz zum Reinigen von Photovoltaikmodulen verstanden. Die Reinigungseinheit kann beispielsweise die Photovoltaikmodule abbürsten, mit Wasser abspritzen und/oder diese trocken oder nass absaugen.

Eine "Bodenpflegeeinheit" ist insbesondere ein Gerät und/oder Aufsatz zum Pflegen des Bodens in der Umgebung der Photovoltaik-Freiflächenanlage. Bei einer Bodenpflegeeinheit kann es sich beispielsweise um ein Mäh-, Mulch-, Saat-, Dünge-, Bewässerungs-, Streu-, Rechen- und/oder Kehrgerät handeln.

Ein "Boden" ist insbesondere der Erdboden und/oder die Erdoberfläche. Bei einem Boden handelt es sich insbesondere um den Untergrund, auf welchem das Photovoltaikmodul und/oder die Photovoltaik-Freiflächenanlage steht oder stehen und welcher diese umgibt.

Mit einer "Umgebung" wird insbesondere das umgebende Land verstanden. Die Umgebung ist insbesondere der Boden, welcher an den Boden, auf dem die Photovoltaik-Freiflächenanlage direkt steht, angrenzt.

Ein "Photovoltaikmodul" (auch "Solarmodul" genannt) wandelt insbesondere Licht der Sonne direkt in elektrische Energie um. Das Photovoltaikmodul weist insbesondere Solarzellen auf, welche in Serie oder parallel geschaltet sind. Ein Photovoltaikmodul ist flexibel oder starr ausgeführt. Beispielsweise besteht ein starres Photovoltaikmodul aus siliziumbasierten Solarzellen, welche auf einem Aluminiumrahmen montiert und von einer Glasplatte abgedeckt sind.

Eine "Photovoltaik-Freiflächenanlage" (auch PV-Freiflächenanlage oder "Solarpark" genannt) ist insbesondere eine Anlage, in welcher Photovoltaikmodule einzeln oder als Gruppe verschaltet sind. Eine Photovoltaik-Freiflächenanlage steht insbesondere frei in der Landschaft, ohne dass diese an einem Gebäude oder an einer Fassade angebracht ist. Eine PV-Freiflächenanlage steht insbesondere ebenerdig auf einer freien Fläche. Eine PV-Freiflächenanlage ist insbesondere ein fest montiertes System, welches mittels einer Unterkonstruktion die Photovoltaikmodule in einem optimalen Winkel zur Sonne ausrichtet. Unter eine PV-Freiflächenanlage wird auch eine nachgeführte Anlage verstanden, die dem Stand der Sonne folgt.

Ein "Defekt" stellt insbesondere einen Schaden oder einen Fehler eines Photovoltaikmoduls dar.

Eine "Minderleistung" ist insbesondere eine Leistung, welche unterhalb einer Sollleistung eines Photovoltaikmoduls liegt. Eine Minderleistung verringert insbesondere die Leistung und somit eine effiziente Stromerzeugung einer gesamten Photovoltaikanlage.

In einer weiteren Ausführungsform weist das Fahrzeugsystem eine Navigationseinheit auf, sodass das Fahrzeugsystem autonom fahrbar ist.

Somit wird ein autonom fahrendes Fahrzeugsystem bereitgestellt, welches alle notwendigen Service-, Wartungs-, Reinigungs- und Pflegeaufgaben in einem Solarpark autonom und automatisiert durchführt. Diese sind insbesondere die Rasenpflegekontrolle und Zustandsanalyse der Solarpaneele, Reinigen der Paneele und Dokumentation des Zustands jedes einzelnen Paneels und der Gesamtanlage. Hierzu fährt das autonome Fahrzeugsystem in vorgegebenen Bahnen eingegrenzte Bereiche der Photovoltaik-Freiflächenanlage ab.

Folglich wird mittels der Navigationseinheit eine digitale Erfassung der gesamten Photovoltaik-Freiflächenanlage und einer Bahnplanung des abzufahrenden Bodenbereiches ermöglicht. Gleichzeitig wird mit der Bahnplanung auch eine Positionierung des autonom fahrenden Fahrzeugsystems in Bezug zum Photovoltaikmodul realisiert. Alternativ oder ergänzend kann die Navigation auch mittels erdverlegter Kabel erfolgen, welche das autonome Fahrzeugsystem entsprechend leiten.

Eine "Navigationseinheit" ist insbesondere ein Bestandteil eines Navigationssystems, welche als technisches System mithilfe von Positionsbestimmung, beispielsweise mittels Satellit, Funk, GSM und/oder inerten oder autonomen Systemen sowie Geoinformationen eine Zielführung zu einem gewählten Ort und/oder eine Route ermöglicht. Eine Navigationseinheit weist insbesondere eine Empfangseinheit auf, welche Funksignale mehrerer codierter Sender auf ihre Laufzeit hin untersucht und daraus den aktuellen Standort und/oder die Position des Fahrzeugsystems und/oder der Wärmbildkamera berechnet. Eine Navigationseinheit des autonomen Fahrzeugsystems kann beispielsweise via GPS oder Galileo (Satellitennavigationssystem) erfolgen. Auch sind andere Navigationsmöglichkeiten verwendbar, welche sich beispielsweise an Markern orientieren, welche vor Ort angeordnet sind. Vorteilhaft ist die Navigationseinheit in die Steuereinheit des Fahrzeugsystems eingebunden und unter Verwendung von entsprechenden Abstands- und/oder Kollisionskontrollsensoren wird ein autonomes Befahren des Bodens und/oder der Umgebung der Photovoltaik-Freiflächenanlage ermöglicht. Hierzu sind entsprechende Navigationssensoren (GPS, IMU) in die Steuereinheit eingebunden.

Um ein autonomes Fahren zu ermöglichen und die Wärmebildkamera optimal zur Aufnahme des Wärmebildes auszurichten, weist das Fahrzeugsystem eine Abstandseinrichtung auf, sodass ein Abstand zu der Photovoltaik-Freiflächenanlage und/oder einem Photovoltaikmodul ermittelbar und/oder einstellbar ist.

Somit kann eine Kollision des Fahrzeugsystems mit einem Bauteil, beispielsweise dem Untergestell, der Photovoltaik-Freiflächenanlage verhindert werden. Auch kann bei einer großen Photovoltaikanlage, bei welcher mehrere autonome Fahrzeuge eingesetzt werden, eine Kollision zwischen diesen Fahrzeugen untereinander verhindert werden. Hierbei kann es auch vorteilhaft sein, dass die Steuer- und/oder Navigationseinheit einzelner Fahrzeugsysteme untereinander kommunizieren.

In einer weiteren Ausgestaltungsform des Fahrzeugsystems weist die Abstandseinrichtung einen Abstandssensor und/oder einen Kollisionskontrollsensor auf und/oder die Abstandseinrichtung ermittelt und/oder stellt mittels einer Bilderkennung den Abstand zum Photovoltaikmodul ein.

Bei einer "Abstandseinrichtung" handelt es sich insbesondere um eine Einrichtung zum Messen eines Abstandes zwischen dem Fahrzeugsystem und/oder der Wärmebildkamera und einem Bezugspunkt oder von Längenänderungen. Eine Abstandseinrichtung weist insbesondere einen Wegsensor, Abstandssensor, Distanzsensor und/oder einen Kollisionskontrollsensor auf. Bei einer Abstandseinrichtung kann es sich um eine optische Abstandseinrichtung handeln, bei welcher mit einer optischen Methode der Abstand zwischen dem Fahrzeugsystem und/oder der Wärmebildkamera und dem Photovoltaikmodul und/oder einem Bestandteil der Photovoltaik-Freiflächenanlage und/oder eines weiteren Fahrzeugsystems bestimmt wird. Beispielsweise verwendet die optische Abstandseinrichtung die Interferometrie mittels Licht und/oder Laserlicht. Ebenso kann es sich bei einer Abstandseinrichtung um eine akustische Abstandseinrichtung handeln, welche eine akustische Methode zur Bestimmung des entsprechenden Abstandes verwendet. Beispielsweise erfolgt die Messung mittels Ultraschallsensoren und entsprechenden Mikrofonen und Triangulationsverfahren.

Unter einer "Bilderkennung" wird insbesondere eine Musterkennung und/oder Bildverarbeitung verstanden, bei welcher Objekte in dem Bild segmentiert und erkannt werden. Mittels der Bilderkennung wird insbesondere ein aufgenommenes Bild mit einem bereits früher aufgenommenen, gespeicherten Bild verglichen, um daraus die entsprechenden Positionen des Fahrzeugsystems, der Wärmebildkamera und/oder Bestandteilen der Photovoltaik-Freiflächenanlage zu ermitteln und/oder einzustellen. Insbesondere wird mittels der Bilderkennung der Zustand der Photovoltaikmodule und/oder der Photovoltaik-Freiflächenanlage unter Verwendung von früher und/oder später aufgenommenen Bildern der Wärmebildkamera bestimmt.

Vorteilhaft weist das Fahrzeugsystem einen weiteren Sensor oder weitere Sensoren auf, mit denen spezifische Messsignale bestimmt und/oder externe Signale aufgenommen werden. Dabei kann es sich beispielsweise um einen Kippungssensor, Batterie- und/oder Akkumulationstemperatursensor, einen Geschwindigkeitssensor und/oder einen kapazitiven Sensor zum Erfassen der Art des Untergrundes, beispielsweise eines Rasens oder einer Asphaltschicht, handeln. Zudem kann das Fahrzeugsystem eine Kommunikationseinheit aufweisen, mittels der beispielsweise die ermittelten Daten, wie Bilder und Positionen, an eine Kommunikationszentrale, beispielsweise am Hauptsitz des Betreibers, übersandt werden.

Ergänzend zur Steuer- und/oder Navigationseinheit kann das Fahrzeugsystem auch eine Positioniereinrichtung aufweisen, sodass eine Position der verstellbaren Halterungseinrichtung, der Reinigungseinheit und/oder der Wärmebildkamera zu dem Photovoltaikmodul ermittelbar und/oder einstellbar ist. Somit ist die Wärmebildkamera in einem geeigneten Betrachtungswinkel zum zu untersuchenden Photovoltaikmodul ausrichtbar. Hierbei kann die Wärmebildkamera so ausgerichtet werden, dass das gesamte Photovoltaikmodul in einem Bild erfasst oder ein genauer zu betrachtender Nahausschnitt des Photovoltaikmoduls dargestellt wird. Durch das bewegungskompensierte Führen und die optimierte Positionierung der Wärmebildkamera zum zu untersuchenden Photovoltaikmodul können auch Messfehler vermieden und somit die Genauigkeit der Überprüfung erhöht werden.

Eine "Positionierungseinrichtung" ist insbesondere eine Einrichtung, welche die räumliche Lage der Wärmebildkamera zu der räumlichen Lage des Photovoltaikmoduls ermittelt und/oder optimal ausrichtet. Mittels der Positionierungseinrichtung wird ein geeigneter Betrachtungs- und/oder Aufnahmewinkel für die Aufnahme des Bildes der Wärmebildkamera mittels der verstellbaren Halterungseinrichtung eingestellt. Hierbei kann die Positioniereinrichtung beispielsweise eine Bilderkennung verwenden, worauf mittels der Steuer- und/oder Navigationseinheit und der verstellbaren Halterungseinrichtung eine optimale Position der Wärmebildkamera zum zu untersuchenden Photovoltaikmodul eingestellt wird.

Folglich kann die Position der Wärmebildkamera reproduzierbar, definiert und wiederholbar eingestellt werden. Hierzu können insbesondere bereits aufgenommene und gespeicherte Bilder der Recheneinheit oder digitale Daten verwendet werden. Zudem kann die Positionierungseinrichtung auch die Abstandeinrichtung aufweisen.

Um unterschiedliche Bodenpflegeaufgaben durchführen zu können, weist das Fahrzeugsystem eine Adaptereinheit zum Verbinden der Bodenpflegeeinheit zum Pflegen des Bodens auf.

Eine "Adaptereinheit" ist insbesondere ein Verbinder zur mechanischen und/oder elektrischen Verbindung einer Bodenpflegeeinheit an das Fahrzeugsystem. Bevorzugt weist das Fahrzeugsystem vorne an seiner Karosserie die Adaptereinheit auf.

Um flexibel den Boden pflegen zu können, weist die Bodenpflegeeinheit ein Mäh-, Mulch-, Kehr- und/oder Schiebeschaufelgerät auf.

Die Bodenpflegeeinheit kann aber auch andere Geräte, wie einen Rechen, Besen, Sauger, ein Düngegerät, Bewässerungsgerät, Aussaatgerät oder ähnliches, aufweisen.

Um die Grünanlage zu bewässern und/oder die Photovoltaikmodule und/oder den Boden mit Wasser zu reinigen, ist dem Fahrzeugsystem ein Wassertank zum Versorgen der Reinigungseinheit und/oder der Bodenpflegeeinheit zugeordnet oder das Fahrzeugsystem weist den Wassertank auf.

Hierzu kann beispielsweise ein Tankanhänger an die Trägerplattform des Fahrzeugsystems angehängt werden.

In einer weiteren Ausführungsform des Fahrzeugsystems weist die Reinigungseinheit einen Bürstenkopf und/oder ein Sprühsystem auf.

Somit können die Photovoltaikmodule optimal mittels Aufsprühen von Wasser durch das Sprühsystem und/oder Einwirken einer Bürste gereinigt werden.

In einem zusätzlichen Aspekt der Erfindung wird die Aufgabe gelöst durch ein Verfahren zum autonomen und automatisierten Warten und/oder Pflegen einer Photovoltaik-Freiflächenanlage, wobei ein zuvor beschriebenes Fahrzeugsystem verwendet wird, und zum Bestimmen eines Wartungszustandes eines Photovoltaikmoduls ein Erfassen eines Bildes des Photovoltaikmoduls mittels der Wärmebildkamera während eines Fahrens des Fahrzeugsystems, eines Reinigens von Photovoltaikmodulen und/oder eines Pflegens eines Bodens in der Umgebung der Photovoltaik-Freiflächenanlage bewegungskompensiert erfolgt.

Somit wird der Wartungszustand eines Photovoltaikmoduls während des Betriebs der Photovoltaik-Freiflächenanlage und während des Pflegens eines umgebenden Bodens und/oder des Reinigens eines Photovoltaikmoduls bestimmt.

Zudem kann nach einer Erstmontage oder Wiedermontage eines Photovoltaikmoduls oder einer Photovoltaikanlage der Zustand der einzelnen Photovoltaikmodule während der Inbetriebnahme überwacht und diese erfasst werden.

Es ist besonders vorteilhaft, dass durch das Verfahren heiße Stellen (sogenannte "Hotspots") einzelner Photovoltaikmodule direkt während des Betriebes erkannt werden, ohne dass diese demontiert und extern überprüft werden müssen. Diese durch das erfindungsgemäße Verfahren direkt vor Ort ermittelbaren heißen Stellen weisen auf Fehler und Defekte, wie Produktionsfehler durch Gasanschlüsse oder Risse in dem Modul, Beschädigungen, beispielsweise durch Hageleinschlag, temporäre Abschattungen durch Verschmutzungen, Vogeldreck, Luftfeuchtigkeit und ähnliches, oder fehlerhafte Anschlüsse hin.

In einer weiteren Gestaltungsform des Verfahrens erfasst die Wärmebildkamera das Bild einer gesamten Fläche des Photovoltaikmoduls.

Somit kann schnell und effizient mittels eines einzelnen Bildes der Zustand eines Photovoltaikmoduls erfasst und dieses für die Bilderkennung und einen späteren Vergleich verwendet werden.

Um den Wartungszustand eines Photovoltaikmoduls kontinuierlich oder in zeitnahen zeitlichen Abständen effizient zu bestimmen, wird beim Erfassen des Bildes des Photovoltaikmoduls gleichzeitig der Boden in der Umgebung des Photovoltaikmoduls gepflegt und/oder ein Photovoltaikmodul gereinigt.

Somit wird in einem Arbeitsgang die Photovoltaikanlage beispielsweise gemäht, gemulcht und jedes einzelne Photovoltaikmodul geprüft und dokumentiert.

Im Weiteren wird die Erfindung anhand von Ausführungsbeispielen näher erläutert. Es zeigen
- Figur 1: eine schematische Darstellung eines Service-Mobil-Systems mit einem Anhänger mit Wassertank und einem Bürstenkopf mit Sprühdüsen, und
- Figur 2: eine stark schematische Darstellung des Service-Mobil-Systems mit einer IR-Kamera und einem Mähvorsatz.

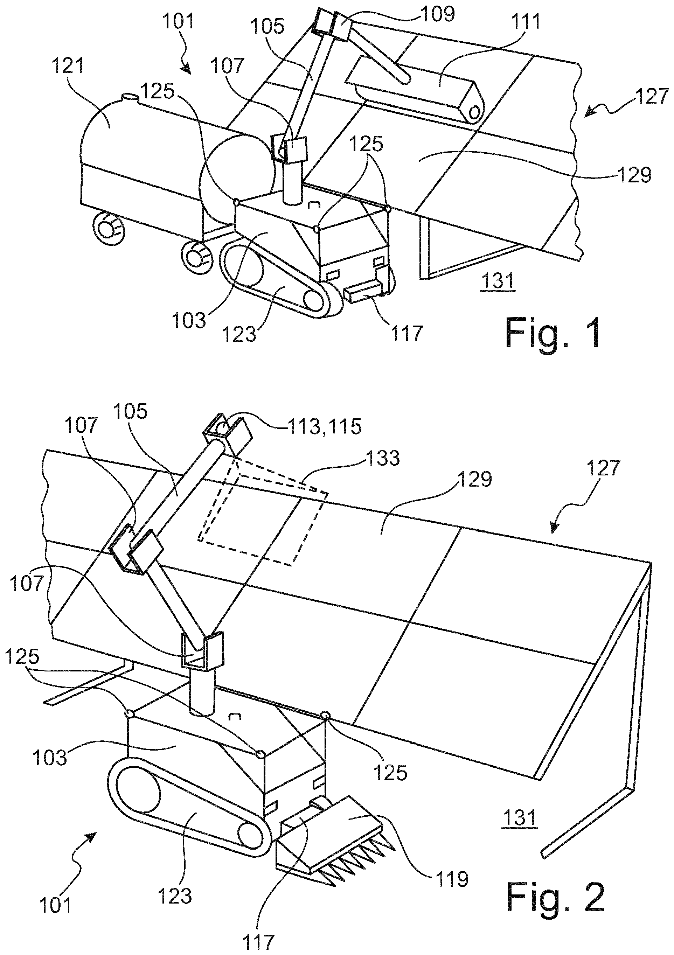

Ein Service-Mobil-System 101 weist eine Trägerplattform 103 auf. Oben an der Trägerplattform 103 ist ein Teleskoparm 105 mit einem Drehgelenk 107 angeordnet. Am oberen Ende des Teleskoparms 105 befindet sich eine Schwenk-Neige-Einheit 109, welche einen Bürstenkopf mit Sprühdüsen 111 hält. An die Trägerplattform 103 des Service-Mobil-Systems 101 ist ein Anhänger 121 mit Wassertank angehängt, welcher zum Versorgen des Bürstenkopfs mit Sprühdüsen 111 mit Wasser dient (siehe Fig. 1).

Des Weiteren weist die Trägerplattform 103 des Service-Mobil-Systems 101 einen Aufnahmeadapter 117, ein Antriebs- und Energiesystem 123 und Abstandssensoren 125 auf.

Mittels des Antriebs- und Energiesystems 123 fährt das Service-Mobil-System 101 entlang eines PV-Freiflächenfeldes 127 über einen Boden 131. Das PV-Freiflächenfeld 127 weist mehrere Solarmodule 129 auf.

Mittels des Service-Mobil-Systems 101 werden die Solarmodule 129 beim Fahren des Service-Mobil-Systems 101 mittels des Bürstenkopfes mit Sprühdüsen 111 unter Wasserzufuhr aus dem Anhänger 121 mit dem Wassertank gereinigt. Hierbei wird entsprechend der Fahrtbewegung des Service-Mobil-Systems 101 mittels einer nicht gezeigten Navigations- und Steuereinheit der Trägerplattform 103 der Bürstenkopf mit Sprühdüsen 111 bewegungskompensiert mittels des Teleskoparms 105 mit dem Drehgelenk 107 und der Schwenk-Neige-Einheit 109 derart geführt, dass jedes Solarmodul 129 optimal gereinigt wird, ohne dabei eine Oberfläche des jeweiligen Solarmoduls 129 zu beschädigen.

Nach Reinigen aller Solarmodule 129 des PV-Freiflächenfeldes 127 fährt das Service-Mobil-System 101 in ein nicht gezeigtes, zugeordnetes Gerätehaus oder alternativ einem mobilen Transportfahrzeug und koppelt automatisch den Anhänger 121 mit dem Wassertank ab sowie setzt automatisch den Bürstenkopf mit Sprühdüsen 111 in einer im Gerätehaus vorgesehenen Halterung ab. Anschließend nimmt das Service-Mobil-System 101 automatisch eine Gimbal-Halterung 113 mit einer IR-Kamera 115 am Ende des Teleskoparms 105 auf. Anschließend fährt das Service-Mobil-System 101 derart an einen vorgegebenen Halter für einen Mähvorsatz 119, dass der Mähvorsatz 119 durch den Aufnahmeadapter 117 aufgenommen und verbunden wird. Nach dieser automatischen Umrüstung des Service-Mobil-System 101 fährt das Service-Mobil-System 101 autonom zum PV-Freiflächenfeld 127 und beginnt mittels des Mähvorsatzes 119 den Rasen auf dem Boden 131 zu mähen (Fig. 2).

Zeitgleich nimmt das Service-Mobil-System 101 nacheinander beim Abfahren eines vorgegebenen Mähplanes mittels der IR-Kamera 115 jeweils einen Bildbereich 133 von Solarzellen des jeweiligen Solarmoduls 129 auf. Hierbei erfolgt die Aufnahme des Bildbereiches 133 bewegungskompensiert über ein entsprechendes Einstellen des Teleskoparms 105, des Drehgelenkes 107 und der Gimbal-Halterung 113. Somit wird die mittels der Gimbal-Halterung 113 drehbare und schwenkbare IR-Kamera 115 derart ausgerichtet, dass die IR-Kamera 115 einen optimalen Aufnahmewinkel frei von Fehlern aufweist.

Die Ausrichtung erfolgt hierbei unter Verwendung einer Bilderkennung in einem nicht gezeigten Rechner der Trägerplattform 103 und der Abstandssensoren 125, wobei die Ausrichtung kontinuierlich mittels des Teleskoparms 105, des Drehgelenks 107 und der Gimbal-Halterung 113 derart angepasst wird, dass eine Fahrtbewegung des Service-Mobil-Systems 101 kompensiert wird. In den aufgenommenen Bildern werden Hotspots ermittelt, welche auf einen möglichen Defekt einer Solarzelle des entsprechenden Solarmoduls 129 schließen lassen.

Während der Bildaufnahme und Auswertung wird kontinuierlich der Rasen durch das Service-Mobil-System 101 mittels des Mähvorsatzes 119 gemäht. Nach Bestimmen des Wartungszustandes des betrachteten Solarmodules 129 wird die IR-Kamera 115 mittels des Teleskoparms 105, des Drehgelenks 107 und der Gimbal-Halterung 113 auf das nächste Solarmodul 129 in der Reihe entsprechend der Fahrtrichtung des Service-Mobil-Systems 101 ausgerichtet. Durch das Abfahren sämtlicher Solarmodule 129 des PV-Freiflächenfeldes 127 wird der Vorgang entsprechend für jedes weitere Solarmodul 129 durchgeführt und gleichzeitig der Rasen auf dem Boden 131 gemäht. Hierbei wird über ein nicht gezeigtes GPS kontinuierlich die Position des Service-Mobil-Systems 101 bestimmt und für das Abfahren der vorgegebenen Bahnen verwendet.

Mittels eines nicht gezeigten Kommunikationstools des Service-Mobil-Systems 101 werden nach Abfahren aller vorgegebenen Bahnen des PV-Freiflächenfeldes 127 die aufgenommenen Daten zur Effizienz der einzelnen Solarmodule 129 an eine nicht gezeigte Kommunikationszentrale des Service-Unternehmens übermittelt, welches die Daten für den Betreiber des PV-Freiflächenfeldes 127 aufarbeitet. Hierbei wird die Anzahl der Fehlstellen eines Solarmoduls 129 als Ampelaussage dem Betreiber bereitgestellt, wobei ein notwendiger Austausch eines Solarmoduls 129 aufgrund einer Anzahl von Fehlstellen < 35 % in rot, eine notwendige weitere Beobachtung des Solarmoduls 129 aufgrund einer Anzahl der Fehlstellen in einem Bereich von 11 % bis 34 % als gelb und ein ordnungsgemäßer Zustand bei einer Anzahl der Fehlstellen in einem Bereich von 0 % bis 10 % in grün dem Betreiber angezeigt wird. Somit stehen dem Betreiber kontinuierlich und zeitnah entsprechende Informationen zu dem Wartungsbedarf und -zustand seines PV-Freiflächenfeldes 127 zur Verfügung, sodass dieser gegebenenfalls einzelne Solarmodule 129 austauschen oder einen entsprechenden Reparaturauftrag vergeben kann.

In einer Alternative werden anstelle eines Service-Mobil-Systems 101, welches umgerüstet wird, zwei oder mehrere Service-Mobil-Systeme 101 auf dem PV-Freiflächenfeld 127 eingesetzt. Hierbei reinigt das erste Service-Mobil-System 101 mit dem Anhänger 121 mit Wassertank und dem Bürstenkopf mit Sprühdüsen 111 die Solarmodule 129, während ein zweites Service-Mobil-System 101 anschließend die gereinigten Solarmodule 129 mittels der IR-Kamera 115 erfasst, während gleichzeitig mittels des Mähvorsatzes 119 der Rasen des Bodens 131 gemäht wird.

### Bezugszeichenliste

- 101: Service-Mobil-System
- 103: Trägerplattform
- 105: Teleskoparm
- 107: Drehgelenk
- 109: Schenk-Neige-Einheit
- 111: Bürstenkopf mit Sprühdüsen
- 113: Gimbal-Halterung
- 115: IR-Kamera
- 117: Aufnahmeadapter
- 119: Mähvorsatz
- 121: Anhänger mit Wassertank
- 123: Antriebs- und Energiesystem
- 125: Abstandssensoren
- 127: PV-Freiflächenfeld
- 129: Solarmodul
- 131: Boden
- 133: Bildbereich

## Patentansprüche

1. Fahrzeugsystem (101) zum autonomen und automatisierten Warten und/oder Pflegen einer Photovoltaik-Freiflächenanlage (127) mit einer Steuereinheit, einer Trägerplattform (103), einer Wärmebildkamera (115) und einer zugeordneten Recheneinheit zum Auswerten eines Bildes der Wärmebildkamera, wobei an der Trägerplattform eine verstellbare Halterungseinrichtung (105) zum Führen der Wärmebildkamera und/oder einer Reinigungseinheit (111) zum Reinigen von Photovoltaikmodulen angeordnet ist, und dem Fahrzeugsystem eine Bodenpflegeeinheit (119) zum Pflegen eines Bodens in einer Umgebung der Photovoltaik-Freiflächenanlage zugeordnet ist, **dadurch gekennzeichnet, dass** die verstellbare Halterungseinrichtung derart eingerichtet ist, dass während eines Fahrens des Fahrzeugsystems, des Reinigens von Photovoltaikmodulen und/oder des Pflegens des Bodens die Wärmebildkamera derart bewegungskompensiert führbar ist, dass mittels eines ausgewerteten Bildes der Wärmebildkamera ein Defekt oder eine Minderleistung eines Photovoltaikmodules der Photovoltaik-Freiflächenanlage detektierbar ist.

2. Fahrzeugsystem nach Anspruch 1, **dadurch gekennzeichnet, dass** das Fahrzeugsystem eine Navigationseinheit aufweist, sodass das Fahrzeugsystem autonom fahrbar ist.

3. Fahrzeugsystem nach Anspruch 1 oder 2, **dadurch gekennzeichnet, dass** das Fahrzeugsystem eine Abstandseinrichtung aufweist, sodass ein Abstand zu der Photovoltaik-Freiflächenanlage und/oder einem Photovoltaikmodul ermittelbar und/oder einstellbar ist.

4. Fahrzeugsystem nach einem der vorherigen Ansprüche, **dadurch gekennzeichnet, dass** die Abstandseinrichtung einen Abstandsensor (125) und/oder einen Kollisionskontrollsensor aufweist und/oder die Abstandseinrichtung mittels einer Bilderkennung den Abstand zum Photovoltaikmodul ermittelt und/oder einstellt.

5. Fahrzeugsystem nach einem der vorherigen Ansprüche, **dadurch gekennzeichnet, dass** das Fahrzeugsystem eine Adaptereinheit (117) zum Verbinden der Bodenpflegeeinheit zum Pflegen des Bodens aufweist.

6. Fahrzeugsystem nach einem der vorherigen Ansprüche, **dadurch gekennzeichnet, dass** die Bodenpflegeeinheit ein Mäh-, Mulch-, Kehr- und/oder Schiebeschaufelgerät aufweist.

7. Fahrzeugsystem nach einem der vorherigen Ansprüche, **dadurch gekennzeichnet, dass** dem Fahrzeugsystem ein Wassertank zum Versorgen der Reinigungseinheit und/oder der Bodenpflegeeinheit zugeordnet ist oder das Fahrzeugsystem den Wassertank aufweist.

8. Fahrzeugsystem nach einem der vorherigen Ansprüche, **dadurch gekennzeichnet, dass** die Reinigungseinheit einen Bürstenkopf und/oder ein Sprühsystem aufweist.

9. Verfahren zum autonomen und automatisierten Warten und/oder Pflegen einer Photovoltaik-Freiflächenanlage, wobei ein Fahrzeugsystem nach einem der Ansprüche 1 bis 8 verwendet wird, und zum Bestimmen eines Wartungszustandes des Photovoltaikmoduls ein Erfassen eines Bildes des Photovoltaikmoduls mittels der Wärmebildkamera während eines Fahrens des Fahrzeugsystems, eines Reinigens von Photovoltaikmodulen und/oder eines Pflegens eines Bodens in der Umgebung der Photovoltaik-Freiflächenanlage bewegungskompensiert erfolgt.

10. Verfahren nach Anspruch 9, **dadurch gekennzeichnet, dass** die Wärmebildkamera das Bild einer gesamten Fläche des Photovoltaikmoduls erfasst.

## Claims

1. Vehicle system (101) for the autonomous and automated maintenance and/or care of a photovoltaic open space plant (127) with a control unit, a support platform (103), a thermal imaging camera (115) and an associated computing unit for evaluating an image of the thermal imaging camera, wherein an adjustable mounting device (105) for guiding the thermal imaging camera and/or a cleaning unit (111) for cleaning photovoltaic modules is arranged on the support platform, and a ground care unit (119) for caring for ground in an environment of the photovoltaic open space plant is associated with the vehicle system, **characterised in that** the adjustable mounting device is designed so that during driving of the vehicle system, cleaning of photovoltaic modules and/or care of the ground, the thermal imaging camera can be guided with motion compensation in such a way that a defect or reduced output of a photovoltaic module of the photovoltaic open space plant is detectable by means of an evaluated image of the thermal imaging camera.

2. Vehicle system according to claim 1, **characterised in that** the vehicle system comprises a navigation unit so that the vehicle system can be driven autonomously.

3. Vehicle system according to claim 1 or 2, **characterised in that** the vehicle system comprises a distance device, so that a distance from the photovoltaic open space plant and/or from a photovoltaic module can be determined and/or set.

4. Vehicle system according to any one of the preceding claims, **characterised in that** the spacing device comprises a distance sensor (125) and/or a collision control sensor and/or the spacing device determines and/or sets the distance from the photovoltaic module by means of image recognition.

5. Vehicle system according to any one of the preceding claims, **characterised in that** the vehicle system comprises an adapter unit (117) for connecting the ground care unit to care for the ground.

6. Vehicle system according to any one of the preceding claims, **characterised in that** the ground care unit comprises a mowing, mulching, sweeping and/or sliding shovel apparatus.

7. Vehicle system according to any one of the preceding claims, **characterised in that** a water tank for supplying the cleaning unit and/or the ground care unit is associated with the vehicle system or **in that** the vehicle system comprises the water tank.

8. Vehicle system according to any one of the preceding claims, **characterised in that** the cleaning unit comprises a brush head and/or a spray system.

9. Method for the autonomous and automated maintenance and/or care of a photovoltaic open space plant, wherein a vehicle system according to any one of claims 1 to 8 is used, and for determining a maintenance state of the photovoltaic module, acquiring an image of the photovoltaic module takes place by means of the thermal imaging camera during driving of the vehicle system, cleaning of photovoltaic modules and/or care of ground in the environment of the photovoltaic open space plant in a motion-compensated manner.

10. Method according to claim 9, **characterised in that** the thermal imaging camera acquires the image of a complete surface of the photovoltaic module.

## Revendications

1. Système de véhicule (101) pour la maintenance et/ou l'entretien autonomes et automatisés d'une installation photovoltaïque à surfaces libres (127), avec une unité de commande, une plate-forme de support (103), une caméra thermique (115) et une unité de calcul associée pour évaluer une image de la caméra thermique, dans lequel est disposé sur la plate-forme de support un dispositif de fixation (105) ajustable pour guider la caméra thermique et/ou une unité de nettoyage (111) pour nettoyer des modules photovoltaïques, et une unité d'entretien du sol (119) pour entretenir un sol dans un environnement de l'installation photovoltaïque à surfaces libres est associée au système de véhicule, **caractérisé en ce que** le dispositif de fixation ajustable est configuré de telle manière que pendant un déplacement du système de véhicule, pendant le nettoyage de modules photovoltaïques et/ou l'entretien du sol, la caméra thermique peut être guidée avec une compensation de mouvement de telle manière qu'un défaut ou une puissance moindre d'un module photovoltaïque de l'installation photovoltaïque à surfaces libres peut être détecté(e) au moyen d'une image évaluée de la caméra thermique.

2. Système de véhicule selon la revendication 1, **caractérisé en ce que** le système de véhicule présente une unité de navigation si bien que le système de véhicule soit déplaçable de manière autonome.

3. Système de véhicule selon la revendication 1 ou 2, **caractérisé en ce que** le système de véhicule présente un dispositif d'espacement si bien qu'une distance par rapport à l'installation photovoltaïque de surfaces libres et/ou par rapport à un module photovoltaïque peut être déterminée et/ou réglée.

4. Système de véhicule selon l'une quelconque des revendications précédentes, **caractérisé en ce que** le dispositif d'espacement présente un capteur d'espacement (125) et/ou un capteur de contrôle de collision, et/ou le dispositif d'espacement détermine et/ou règle l'espacement par rapport au module photovoltaïque au moyen d'une reconnaissance d'image.

5. Système de véhicule selon l'une quelconque des revendications précédentes, **caractérisé en ce que** le système de véhicule présente une unité adaptatrice (117) destinée à être reliée à l'unité d'entretien du sol pour entretenir le sol.

6. Système de véhicule selon l'une quelconque des revendications précédentes, **caractérisé en ce que** l'unité d'entretien du sol présente un appareil de fauchage, de paillage, de balayage et/ou à pelle coulissante.

7. Système de véhicule selon l'une quelconque des revendications précédentes, **caractérisé en ce qu'**un réservoir d'eau pour alimenter l'unité de nettoyage et/ou l'unité d'entretien du sol est associé au système de véhicule ou le système de véhicule présente le réservoir d'eau.

8. Système de véhicule selon l'une quelconque des revendications précédentes, **caractérisé en ce que** l'unité de nettoyage présente une tête de brosse et/ou un système de pulvérisation.

9. Procédé pour la maintenance et/ou l'entretien autonomes et automatisés d'une installation photovoltaïque à surfaces libres, dans lequel un système de véhicule selon l'une quelconque des revendications 1 à 8 est utilisé, et pour définir un état de maintenance du module photovoltaïque, une détection d'une image du module photovoltaïque est effectuée avec une compensation de mouvement au moyen de la caméra thermique pendant un déplacement du système de véhicule, un nettoyage de modules photovoltaïques et/ou un entretien d'un sol dans l'environnement de l'installation photovoltaïque à surfaces libres.

10. Procédé selon la revendication 9, **caractérisé en ce que** la caméra thermique détecte l'image de la totalité d'une surface du module photovoltaïque.
